# EUROPÄISCHE PATENTSCHRIFT

(11) **EP 0 970 604 B1**
(45) Veröffentlichungstag und Bekanntmachung des Hinweises auf die Patenterteilung: **29.08.2001**
(21) Anmeldenummer: 98810638.1
(22) Anmeldetag: 07.07.1998
(51) Int. Cl.: A01K 1/10, A01K 15/02, A01K 7/00

(54) **Stall**
Cow house
Etable

(43) Veröffentlichungstag der Anmeldung: 12.01.2000
(73) Patentinhaber: Reuteler, Andreas, 3792 Saanen (CH); Reuteler-Jörg, Franziska, 3792 Saanen (CH)
(72) Erfinder: Reuteler, Andreas, 3792 Saanen (CH); Reuteler-Jörg, Franziska, 3792 Saanen (CH)
(74) Vertreter: AMMANN PATENTANWAELTE AG BERN

(56) Entgegenhaltungen:
- CH-A- 349 438
- DE-A- 2 914 451
- DE-A- 3 115 581
- DE-A- 3 216 904
- DE-B- 1 164 739
- DE-B- 1 174 567
- DE-C- 592 028
- FR-A- 1 355 118

## Beschreibung

Die vorliegende Erfindung betrifft einen Stall gemäss Oberbegriff des Anspruchs 1. Solche Ställe sind bekannt, z. B. aus DE-C-592 028, insbesondere als Anbindeställe für Grossvieh. Dabei ist die Begrenzung als schwenkbares Raufengitter ausgebildet, das im heruntergeschwenkten Zustand das Tier zurückhält bzw. -drängt damit Exkremente in eine Kotrinne ausserhalb des Bereiches fallen, in welchem sich das Tier sonst aufhält oder hinlegt. Das Raufengitter befindet sich jedoch in geringem Abstand über einer Krippe, so dass unterhalb desselben kein Raum für das liegende Tier verbleibt.

Ziel vorliegender Erfindung ist es, auf artgerechte, auch für Biobetriebe geeignete Art dafür zu sorgen, dass die Tiere, insbesondere Kühe, sauber bleiben und sich immer auf natürliche Weise hinlegen und aufstehen können. Damit wird der Arbeitsaufwand auch dadurch verringert, dass der Landwirt nach der Fütterung den Stall verlassen und die Tiere weiterfressen lassen kann. Ein weiterer Vorteil kann dadurch erzielt werden, dass der Stand, das heisst, die erhöhte Standfläche für die Tiere, kürzer bemessen werden kann. Diese Ziele und Vorteile sind gemäss kennzeichnendem Teil des Anspruchs 1 realisierbar. Die abhängigen Ansprüche umschreiben vorteilhafte Ausführungen und Varianten.

Die Erfindung wird nun anhand eines in der Zeichnung dargestellten Ausführungsbeispiels näher erläutert.
Abb. 1 zeigt schematisch einen Querschnitt durch das erste Ausführungsbeispiel mit einem offenen Fressgitter,
Abb. 2 zeigt denselben Querschnitt mit geschlossenem Fressgitter,
Abb. 3 zeigt denselben Querschnitt im Zustand zum Nachfüllen von Futter, und
Abb. 4 zeigt eine bevorzugte Ausführung der Tränkevorrichtung.

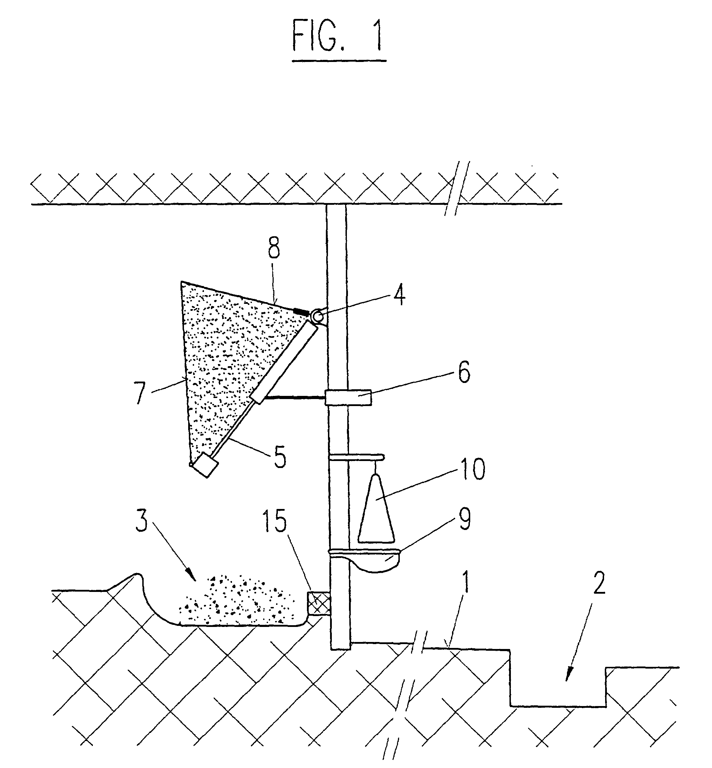

Abbildung 1 zeigt schematisch den Stand 1 eines Anbindestalles, auf dem die Tiere, insbesondere Milchkühe, stehen oder liegen. Am hinteren Ende des erhöhten und leicht nach hinten geneigten Standes befindet sich die Kotrinne 2 in welche die Exkremente der Tiere fallen sollen um die ganze Fläche des Standes 1 und somit die Tiere sauber zu halten.

Die Futterstelle weist einerseits einen Trog oder eine Krippe 3 für Kurzfutter, also zum Beispiel Kraftfutter oder Silage auf. Die Raufe zur Aufnahme von Rauhfutter und Gras besteht aus einem um eine Achse 4 schwenkbaren Fressgitter 5 das mittels eines pneumatischen oder hydraulischen Zylinders 6 verschwenkt werden kann. Mit dem unteren Ende des Fressgitters 5 ist eine Rückwand 7 schwenkbar verbunden, und sie kann mittels eines Seilzuges 8 von der Schwenkachse 4 aus geöffnet und geschlossen werden.

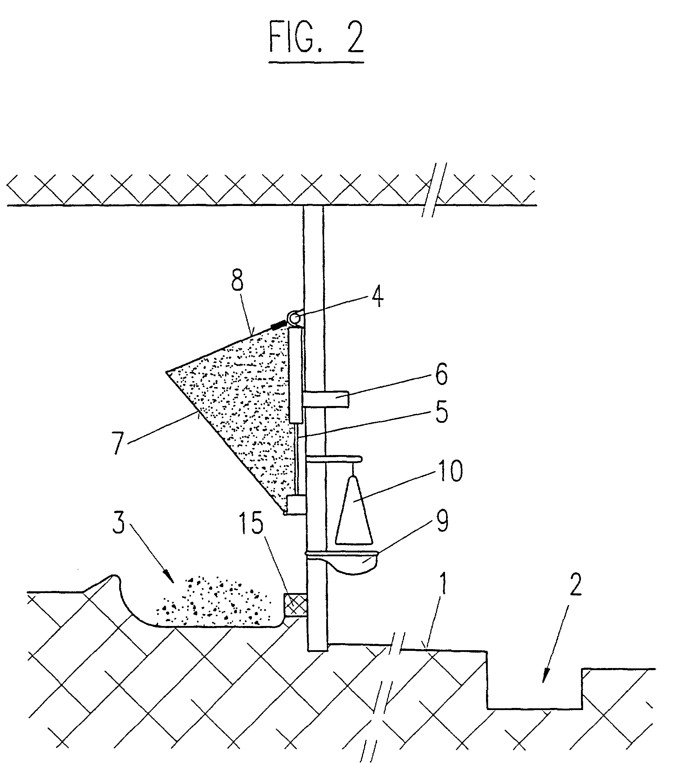

Abb. 1 zeigt den offenen Zustand der Raufe beziehungsweise des Fressgitters 5. Das stehende Tier kann bei dieser Stellung mit dem Kopf vordringen und Kurzfutter aus der Krippe 3 aufnehmen. Diese Stellung der Einrichtung gilt jedoch nur für möglichst kurze Zeit während der Aufnahme von Kurzfutter. Sonst wird das Fressgitter 5 stets in die geschlossene Stellung nach Abbildung 2 abgesenkt und dort durch den Zylinder 6 derart gehalten, dass das Tier das Fressgitter nicht aufzustossen vermag. Damit wird das stehende Tier zurückgedrängt in eine Stellung bei der Exkremente nicht mehr auf den Stand 1 fallen können. Das Tier kann jedoch in der Raufe befindliches Futter, zum Beispiel Heu fressen, und während dieses Zustandes ist keine Wartung erforderlich.

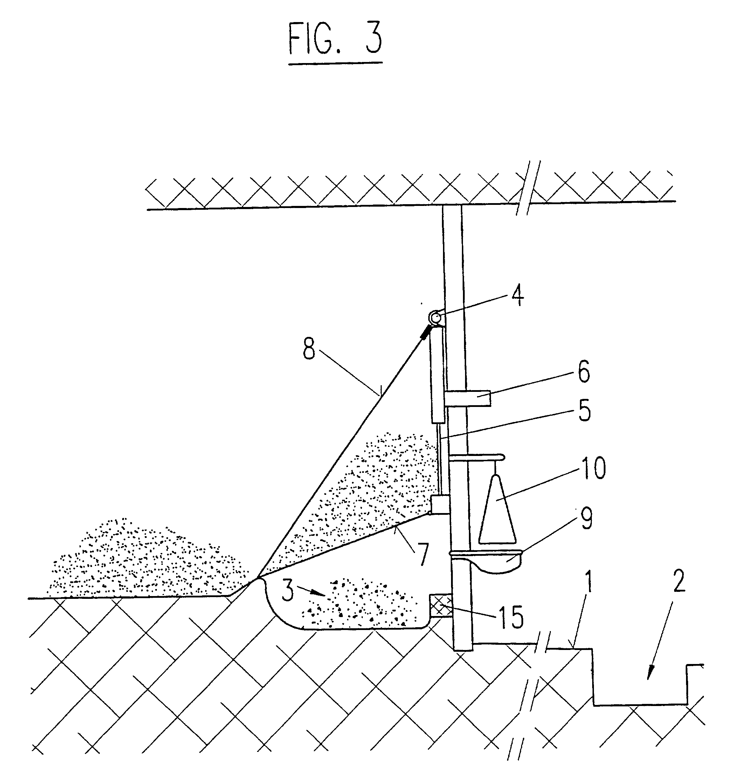

Abb. 3 zeigt eine weitere Stellung der Einrichtung, in welcher die Rückwand 7 heruntergeklappt ist zum Nachfüllen von Heu oder Gras. Nach erfolgter Füllung wird die Rückwand wieder in die Stellung nach Figur 2 hochgezogen.

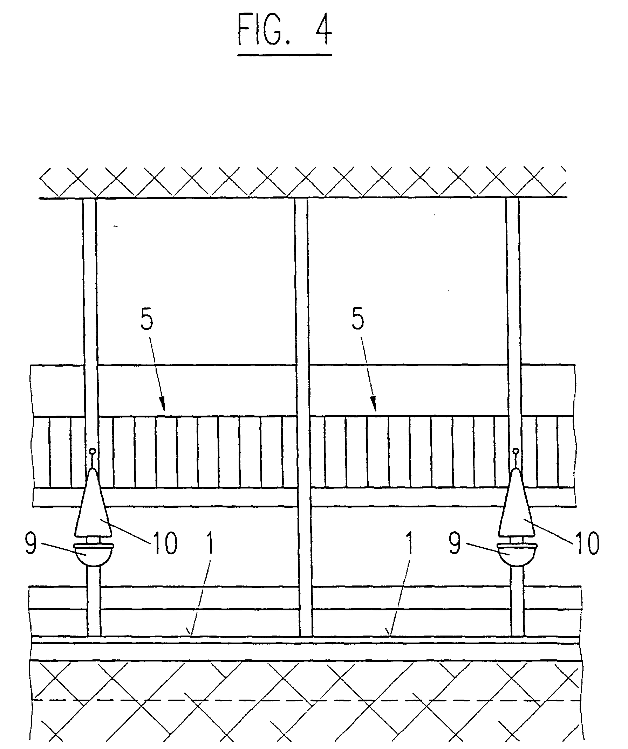

In den Abb. 1 bis 3 ist eine Tränkvorrichtung bestehend aus einer Tränkeschale 9 und einer darüber aufgehängten Abdeckung in Form eines konischen Pendels 10 dargestellt. Wie Abb. 4 zeigt, kann je eine solche Tränkevorrichtung für zwei Standplätze für Tiere vorgesehen sein. Die Abdeckung verhindert, dass Verunreinigungen in die Tränkeschale 9 fallen, ohne die Tiere beim Trinken zu behindern.

Es sind gewisse Abweichungen beziehungsweise Varianten möglich. So könnte zum Beispiel die Rückwand 7 der Raufe unbeweglich in der Stellung nach Abb. 1 und 2 angeordnet sein was zwar eine gewisse Erschwerung beim Nachfüllen des Futters mit sich bringt. Da für alle Plätze beziehungsweise Tiere dieselben Bedingungen gelten, kann der Antrieb für alle Plätze gemeinsam sein und die Bewegung kann über Wellen und Gestänge an die einzelnen Einrichtungsteile übertragen werden. Das heisst, dass alle Fressgitter 5 eines Stalles an einer gemeinsamen Welle die in Schwenklagern 4 gelagert ist, befestigt sein können, wobei der Antrieb-durch einen gemeinsamen Zylinder oder sonstige geeignete Mittel erfolgt. Entsprechend kann eine gemeinsame Welle vorgesehen sein auf welche die Seilzüge 8 für die Rückwände 7 gewickelt sind.

Bei der dargestellten Ausführung können sich die Tiere immer auf natürliche, ihrer Art entsprechende Weise hinlegen und aufstehen, was durch den Abstand zwischen Krippenholz 15 und Fressgitter 5 ermöglicht wird. Entsprechend ist es möglich, den Stand 1 relativ kurz auszuführen.

## Patentansprüche

1. Stall mit einen Stand (1) auf welchem mindestens ein Tier zur Futteraufnahme stehen und ruhen kann, wobei auf der Fütterungsseite über einem Krippenholz (15) eine schwenkbare Begrenzung (5) vorgesehen ist, welche in wirksamer Stellung das Tier zurückdrängt beziehungsweise zurückhält, **dadurch gekennzeichnet**,
dass zwischen der Begrenzung (5) und dem Krippenholz (15) auch bei wirksamer Stellung der Begrenzung (5) ein freier Durchlass für den Kopf des Tieres verbleibt.

2. Stall nach Anspruch 1
**dadurch gekennzeichnet**,
dass die Begrenzung ein Fressgitter (5) einer Raufe ist.

3. Stall nach Anspruch 2,
**dadurch gekennzeichnet**,
dass mit dem Fressgitter (5) eine Rückwand (7) der Raufe schwenkbar verbunden ist.

4. Stall nach Anspruch 1 - 3,
gekennzeichnet durch einen Mechanismus zur gemeinsamen Betätigung mehrerer Begrenzungen (5) und / oder Rückwände (7).

5. Stall nach einem der Ansprüche 1 - 4,
**dadurch gekennzeichnet**,
dass ein Trog (3) für Kurzfutter bei hochgeschwenkter Begrenzung (5) zugänglich ist.

6. Stall nach einem der Ansprüche 1 - 5, mit mindestens einer Tränkeschale,
**dadurch gekennzeichnet**,
dass über der beziehungsweise den Tränkeschale(n) (9) je eine Abdeckung (10), zum Beispiel ein konisches Pendel aufgehängt ist.

## Claims

1. Stable comprising a stall (1) allowing at least one animal to stand while feeding and to rest, a hinged stop (5) which in the active position drives resp. keeps back the animal being provided on the feeding side above an upper edge (15) of a feeder, **characterised in that** a free passage for the head of the animal subsists between the stop (5) and the upper edge (15) of the feeder also in the active position of the stop (5).

2. Stable according to claim 1, **characterised in that** the stop is the feed frame (5) of a rack.

3. Stable according to claim 2, **characterised in that** a rear wall (7) of the rack is hinged to the feed frame (5).

4. Stable according to one of claims 1 to 3, characterised by a mechanism for the common actuation of a plurality of stops (5) and/or rear walls (7).

5. Stable according to one of claims 1 to 4, **characterised in that** a trough (3) for concentrated fodder is accessible when the stop (5) is lifted.

6. Stable according to one of claims 1 to 5, comprising at least one drinking bowl, **characterised in that** a respective cover (10), e.g. a conical pendulum, is suspended above the drinking bowl or bowls.

## Revendications

1. Etable comprenant une stalle sur laquelle au moins un animal peut se lever pour manger et se coucher, une délimitation (5) basculante, en position active de laquelle l'animal est repoussé resp. retenu, étant prévue sur le côté d'affouragement au-dessus d'une arête supérieure d'une crèche, **caractérisée en ce qu**'un passage libre pour la tête de l'animal subsiste entre ladite délimitation (5) et l'arête supérieure de la crèche (15) également en position active de la délimitation (5).

2. Etable selon la revendication 1, **caractérisée en ce que** ladite délimitation est le cornadis (5) d'un râtelier.

3. Etable selon la revendication 2, **caractérisée en ce qu**'une paroi arrière (7) du râtelier est reliée de manière orientable audit cornadis (5).

4. Etable selon l'une des revendications 1 à 3, caractérisée par un mécanisme permettant l'actionnement commun de plusieurs délimitations (5) et/ou parois arrière (7).

5. Etable selon l'une des revendications 1 à 4, **caractérisée en ce qu**'une auge (3) pour fourrages substantiels est accessible lorsque la délimitation (5) est relevée.

6. Etable selon l'une des revendications 1 à 5, comprenant au moins un bol d'abreuvement, **caractérisée en ce qu**'un élément de recouvrement (10), par exemple une pendule conique, est suspendu sur le ou les bol(s) d'abreuvement.
